(19) Europäisches Patentamt
European Patent Office
Office européen des brevets

(11) **EP 1 598 717 B1**

(12) **EUROPÄISCHE PATENTSCHRIFT**

(45) Veröffentlichungstag und Bekanntmachung des Hinweises auf die Patenterteilung:
**03.09.2008 Patentblatt 2008/36**

(51) Int Cl.:
***G05B 23/02*** *(2006.01)*

(21) Anmeldenummer: **05008132.2**

(22) Anmeldetag: **14.04.2005**

(54) **Verfahren zum Überwachen einer Mehrzahl von Gasanlagen**

Method for monitoring of a plurality of gas plants

Procédé de surveillance d'une pluralité des installations de gaz

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **17.05.2004 DE 102004024809**

(43) Veröffentlichungstag der Anmeldung:
**23.11.2005 Patentblatt 2005/47**

(73) Patentinhaber: **E.ON Ruhrgas AG**
**45138 Essen (DE)**

(72) Erfinder:
• **Steiner, Klaus, Dr.**
**44795 Bochum (DE)**
• **Behr, Rita**
**45472 Mülheim-Ruhr (DE)**
• **Linke, Gerald, Dr.**
**45134 Essen (DE)**

(74) Vertreter: **Harlacher, Mechthild**
**E.ON Ruhrgas AG,**
**Huttropstrasse 60**
**45138 Essen (DE)**

(56) Entgegenhaltungen:
**US-A- 5 447 059    US-A1- 2002 143 421**
**US-B1- 6 343 251**

**Beschreibung**

Die Erfindung betrifft ein Verfahren zum Überwachen einer Mehrzahl von Gasanlagen, mit Hilfe einer Datenverarbeitungseinrichtung,
wobei für jede Gasanlage (1):

> a1) die Gasanlage (1) charakterisierende Daten erfasst und gespeichert werden, wobei die charakterisierenden Daten zumindest das Alter von Bestandteilen (4 - 9) der Gasanlage (1) beschreiben,
> a2) wenigstens ein Betriebsereignis der Gasanlage (1) erfasst wird,
> a3) zumindest aus den charakterisierende Daten ein effektives Anlagenalter der Gasanlage ermittelt wird.

Ein derartiges Verfahren ist aus der US-A-5 447 059 bekannt. Eine Gasanlage wird mittels einer Vorrichtung überwacht, wobei Daten, die das Alter von Bestandteilen der Gasanlage beschreiben sowie wenigstens ein Betriebsereignis der Gasanlage erfasst und gespeichert werden. Aus diesen Daten wird das effektive Anlagenalter der Gasanlage ermittelt.

Eine Gasanlage ist die Zusammenfassung oder Verbindung von Bauelementen und -gruppen (z.B. Gas- Druckregelgeräte, Sicherheitseinrichtungen, Filter-Baugruppen, Regelstrecke, Messstrecke) zur einer baulich oder funktional abgegrenzten Einrichtung, beispielsweise eine Gas-Druckregel-Anlage, eine Gas-Mischanlage oder eine Gas-Meßanlage sowie eigenständige Einrichtungen zur Filterung, Abscheidung oder Odorierung. Zur Gasanlage gehören auch Gebäude, Nebenräume, Hilfsanlagen, außenliegende Absperrorgane, etc. (vgl. DVGW-Arbeitsblätter G491 "Gasdruckregelanlagen für Eingangsdrücke bis einschließlich 100 bar, Prüfung, Inbetriebnahme und Betrieb", G 492 "Gasmessanlagen für Eingangsdrücke bis einschließlich 100 bar, Fertigung, Errichtung, Prüfung, Inbetriebnahme, Betrieb und Instandhaltung" und G 495 "Gasanlagen-Instandhaltung", November 1994).

Der Betreiber einer GDRM-Messanlage ist für deren technische Sicherheit und Zuverlässigkeit verantwortlich (Integrität). Die Betreiberverantwortung ist im DVGW-Regelwert beschrieben und umfasst die Betriebsführung, Verantwortung aller betrieblichen Maßnahmen an der Anlage und die technisch-wirtschaftliche optimale Abwicklung aller Instandhaltungsaktionen. Dies stellt sicher, dass Gasanlagen bzw. sämtliche Komponenten für ihren Bestimmungszweck die erforderliche Zuverlässigkeit und Sicherheit aufweisen, auf die richtigen Drücke eingestellt sind und richtig eingebaut und gegen Schmutz, Flüssigkeit, Einfrieren sowie andere Einflüsse geschützt sind, die ihre Funktion beeinträchtigen können. Unter Instandhaltung sind alle Maßnahmen zur Feststellung und Beurteilung des Ist-Zustands sowie zur Bewahrung und Wiederherstellung des Soll-Zustands von Gasanlagen, ihrer Bauelemente und Baugruppen zu verstehen. Diese Maßnahmen umfassen die Überwachung, die Wartung und die Instandsetzung. Unter Überwachung sind alle Maßnahmen zu verstehen, die dazu dienen, den Ist-Zustand von Gasanlagen oder ihrer Bauelemente und Baugruppen in Zeitraum zwischen turnusmäßigen Wartungsarbeiten festzustellen und zu beurteilen. Zu den bekannten Überwachungsmaßnahmen zählen die Sichtkontrolle, die Inspektion und die Funktionsprüfung (vgl. DVGW-Arbeitsblatt G 495).

Grundsätzlich können die Sicherheit und die Zuverlässigkeit von Gasanlagen dadurch erhöht werden, dass die genannten Überwachungsmaßnahmen, wie beispielsweise Sichtkontrolle und Inspektion, regelmäßig und in kürzeren Abständen durchgeführt werden. Dies erhöht jedoch die Kosten der Instandhaltung. Wenn andererseits die Abstände der Überwachungsmaßnahmen zu groß werden, erhöht sich die Gefahr von Ausfällen und Havarien, was aus Gründen der Sicherheit nicht erwünscht ist und darüber hinaus ebenfalls die Kosten erhöht. Es ist deshalb eine Optimierung der Abstände verschiedener regelmäßig durchzuführender Überwachungsmaßnahmen erwünscht. Dies gilt insbesondere dann, wenn eine große Anzahl von Gasanlagen zu überwachen ist. Die optimale Wahl der Abstände der Überwachungsmaßnahmen wird bei einer großen Anzahl von zu überwachenden Anlagen zusätzlich dadurch erschwert, dass die verschiedenen Anlagen ein unterschiedliches Alter, eine unterschiedliche konstruktive Gestaltung, unterschiedliche Betriebsparameter und weitere Unterschiede aufweisen, die einer einheitlichen Planung der Maßnahmen entgegenstehen.

Darüber hinaus obliegt einem Betreiber einer Gasanlage, insbesondere einer GDRM-Anlage (Gasdruckregel- und messanlage) nicht nur die Instandhaltung, sondern der Betreiber ist ganz allgemein für die Integrität der Anlage zuständig. Die Betreiberverantwortung umfasst beispielsweise auch die Planung von Investitionen für einen Neubau oder einen Umbau vorhandener Anlagen. Für eine kostenoptimale Planung solcher Investitionsmaßnahmen ist ebenfalls eine Integritätsbewertung der Gasanlagen erforderlich.

Aufgabe der Erfindung ist es, die Kosten des Betriebs einer Gasanlage, beispielsweise die Kosten der Instandhaltung, bei gleichzeitiger Bewahrung einer hohen Sicherheit und Zuverlässigkeit zu verringern.

Diese Aufgabe wird erfindungsgemäß durch ein Verfahren mit den Merkmalen des Patentanspruchs 1 gelöst.

Eine Mehrzahl, vorzugsweise eine große Anzahl, von Gasanlagen (beispielsweise GDRM-Anlagen) wird mit Hilfe einer Datenverarbeitungseinrichtung überwacht, indem für jede Gasanlage zunächst Daten erfasst und gespeichert werden, die die Gasanlage charakterisieren, wobei die charakterisierende Daten zumindest das Alter von Bestandteilen der Gasanlage beschreiben. Beispielsweise werden die die Gasanlagen charakterisierenden Daten in einer geordneten Struktur in Zuordnung zu Daten gespeichert, die die jeweiligen Gasanlagen identifizieren. Anschließend werden, vorzugsweise in regelmäßigen, vorgegebenen Abständen, mehrere Leitgrößen gewonnen, indem zumindest (1.) aus den charakterisierenden Daten ein effektives Anlagenalter der Gasanlage ermittelt und daraus wenigstens eine erste Leitgröße abgeleitet wird, und (2.) wenigstens ein (inzwischen eingetretenes) Betriebsereignis der Gasanlage erfasst und daraus wenigstens eine zweite Leitgröße abgeleitet wird. Das effektive Anlagenalter ergibt sich beispielsweise aus dem arithmetischen Mittel des Alters vorgegebener Bestandteile der Gasanlage (bei einer GDRM-Anlage beispielsweise Filter, Regler, Sicherheitseinrichtungen, Messeinrichtung, Gebäude, Heizkessel und Wärmetauscher). Das erfasste Betriebsereignis wird beispielsweise durch Sensoren gemessen oder am Ort der Anlage durch einen Bediener erfasst und eingegeben und umfasst beispielsweise Störungsmeldungen, bestimmte Betriebsparameter oder bestimmte Abweichungen von Betriebsparametern gegenüber vorgegebenen Grenzen. Die Ableitung der jeweiligen Leitgrößen erfolgt mittels vorgegebenen funktionalen Zusammenhänge programmgesteuert durch die Datenverarbeitungseinrichtung. Anschließend werden aus den Leitgrößen jeder Gasanlage jeweils ein Sicherheitswert und ein Zuverlässigkeitswert errechnet. Dann wird der Sicherheitswert mit einem ersten Schwellwert und der Zuverlässigkeitswert mit einem zweiten Schwellwert verglichen, wobei in Abhängigkeit vom Über- oder Unterschreiten der beiden Schwellwerte ein Ausgabesignal erzeugt wird. Beispielsweise zeigt das Ausgabesignal die Notwendigkeit einer vorbeugenden Instandhaltungsmaßnahme oder eines Neubaus, Umbaus oder Komponentenaustauschs an. Das Ausgabesignal kann auch eine bestimmte Ausgabe auf einem Computerbildschirm oder einem Drucker umfassen. Die vorbeugende Instandhaltungsmaßnahme kann beispielsweise eine weitere Überwachungsmaßnahme, wie eine Sichtkontrolle, eine Inspektion und/oder eine Funktionsprüfung umfassen. Die Schritte des Gewinnens der Leitgrößen, des Errechnens des Sicherheitswerts und des Zuverlässigkeitswert und des Vergleichs dieser Werte mit den Schwellwerten werden in vorgegebenen Abständen, beispielsweise periodisch, wiederholt.

Bei einer Ausführungsform des erfindungsgemäßen Verfahrens wird das Ausgabesignal dann erzeugt, wenn der Sicherheitswert den ersten Schwellwert unterschreitet und/oder wenn der Sicherheitswert den zweiten Schwellwert unterschreitet. Dieses Unterschreiten wenigstens eines der beiden Schwellwerte zeigt beispielsweise die Notwendigkeit einer vorbeugenden Instandhaltungsmaßnahme oder das Erfordernis einer weitergehenden Detailprüfung an. Bei einer anderen Ausführungsform wird das Ausgabesignal dann erzeugt, wenn sowohl der Sicherheitswert den ersten Schwellwert überschreitet als auch der Zuverlässigkeitswert den zweiten Schwellwert überschreitet. Bei dieser Ausführungsform zeigt das Ausgabesignal das Vorhandensein eines vorgegebenen Maßes der Integrität an, was beispielsweise zu einer Verlängerung des Überwachungsturnus (z.B. nach DVGW-Arbeitsblatt G 495), d.h. einer Verlängerung des vorgegebenen Abstands zwischen vorgegebenen Instandhaltungsmaßnahmen zur Folge haben könnte.

Die Auswahl und Ableitung der Leitgrößen und die Berechnung der Sicherheitswerte und Zuverlässigkeitswerte wird derart vorgenommen, dass der Vergleich mit den Schwellwerten eine zuverlässige Aussage über die Notwendigkeit einer vorbeugenden Instandhaltungsmaßnahme gestattet. Dabei ist eine Optimierung vorzunehmen. Einerseits würde eine große Anzahl von Leitgrößen die Aussagekraft des Ausgabesignals erhöhen; andererseits erhöht dies den Verfahrensaufwand und somit die Kosten. Es hat sich gezeigt, dass die Anzahl der verwendeten Leitgrößen auf jeweils etwa 10 bis 15 Leitgrößen für die Berechnung des Sicherheitswerts und des Zuverlässigkeitswerts beschränkt werden kann. Das erfindungsgemäße Verfahren gestattet eine kontinuierliche Integritätsbewertung der Gasanlagen und vermeiden umfangreiche, arbeitsintensive und vorbeugende Begehungen, Inspektionen, Funktionskontrollen und Messungen an Gasanlagen.

Vorteilhafte und bevorzugte Weiterbildungen des erfindungsgemäßen Verfahrens sind in den Unteransprüchen gekennzeichnet.

Im folgenden werden bevorzugte Ausführungsformen des erfindungsgemäßen Verfahrens anhand der Zeichnungen näher beschrieben, wobei in den Zeichnungen:

Fig. 1 eine beispielhafte GDRM-Anlage schematisch darstellt;
Fig. 2A und 2B die Bildung von Sicherheitswerten und Zuverlässigkeitswerten und deren Vergleich mit vorgegebenen Schwellwerten schematisch veranschaulicht;
Fig. 3 eine Auflistung von Leitgrößen, die zur Bildung von Sicherheitswerten und Zuverlässigkeitswerten herangezogen werden, mit zugeordneten Faktoren ist; und
Fig. 4 eine grafische Darstellung ist, die veranschaulicht, wie aus dem Überschreiten vorgegebener Schwellwerte durch die Sicherheits- und Zuverlässigkeitswerte Faktoren für eine Verlängerung von Überwachungsintervallen abgeleitet werden.

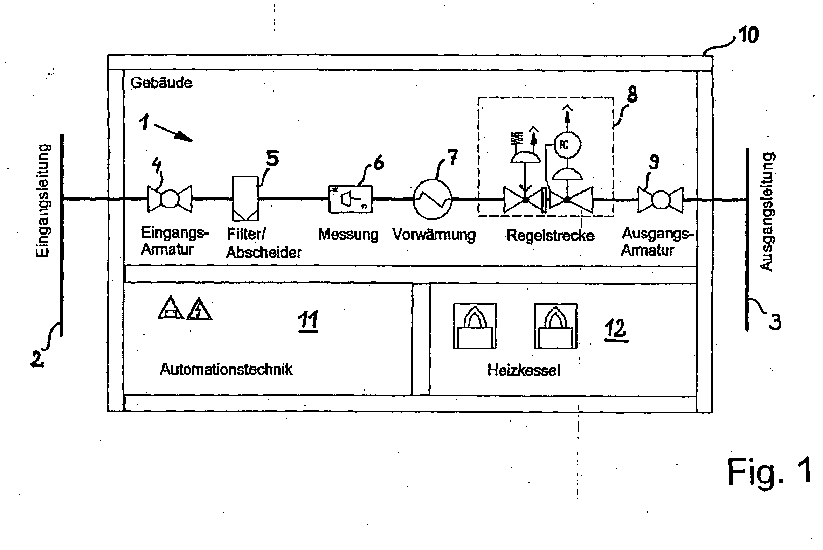

In Fig. 1 ist schematische eine beispielhafte GDRM-Anlage (Gasdruckregel- und -messanlage) dargestellt. Die beispielhafte GDRM-Anlage ist einschienig, d.h. sie besteht aus lediglich einer GDRM-Strecke 1. Eine GDRM-Strecke ist eine Hintereinanderschaltung von mehreren Bauelementen. Allgemein ist eine GDRM-Anlage eine Zusammenfassung von einer oder mehreren Strecken zu einer funktional abgegrenzten Einrichtung. Die Zusammenfassung von einer oder mehreren Anlagen zu einer baulich abgegrenzten Einheit bezeichnet man als GDRM-Station. An einem geographischen Standort können sich eine oder mehrere zusammengefaßte Stationen befinden.

Die in Fig. 1 dargestellte einschienige GDRM-Anlage umfasst eine zwischen einer Eingangsleitung 2 und einer Ausgangsleitung 3 eingebundene Strecke 1 mit einer Eingangsarmatur 4, einem Filter/Abscheider 5, einem Gaszähler 6 (beispielsweise einem Turbinenradgaszähler), einer Vorwärmeinrichtung 7, einer Regelstrecke 8 und einer Ausgangsarmatur 9. In dem Gebäude der GDRM-Station 10 sind ferner ein Raum 11 mit Automationstechnik und ein die für die Vorwärmung erforderlichen Heizkessel enthaltender Raum 12 vorgesehen.

Die in Fig. 1 dargestellte GDRM-Anlage stellt nur eines von vielen möglichen Beispielen für solche Anlagen dar. Die in einem großen Gasverteilungsnetz vorhandenen GDRM-Anlagen haben aufgrund ihres unterschiedlichen Alters und der unterschiedlichen Aufgaben und Standortbedingungen eine stark variierende bauliche Konfiguration. Die GDRM-Anlagen unterscheiden sich in der Anzahl der vorhandenen Strecken, und die GDRM-Strecken unterscheiden sich in der Art und Abfolge der enthaltenen Bauelemente oder Komponenten. Beispielsweise können in Abweichung von Fig. 1 in einer Strecke zusätzlich zu einem Turbinenradgaszähler oder anstelle des Turbinenradgaszählers andere Zähler, beispielsweise Ultraschallgaszähler, vorhanden sein. Die verwendeten Komponenten hängen insbesondere stark von Betriebsparametern, wie dem Eingangsdruck und dem Normvolumenstrom, ab.

Es hat sich gezeigt, dass bestimmte konstruktive Merkmale von besonderer Relevanz für die Zuverlässigkeit und Sicherheit einer Anlage sind. Solche konstruktiven Charakteristika sind beispielsweise das Vorhandensein und das Alter von Unterflur-Anlagenteilen, das Vorhandensein eines lokalen Korrosionsschutzes, die Möglichkeiten einer Ferndiagnose, die Art der Ausführung einer Entlüftungsleitung (beispielsweise, ob diese in den Heizraum oder nach außen in die Umgebung der Station führt), die Art der Ausführung von Mauerdurchführungen in explosionsgefährdeten Bereichen und weitere konstruktive Besonderheiten, wie beispielsweise eine Umgangsleitung ohne Druckabsicherung, das Vorhandensein von Armaturen mit Stopfbuchse oder das Vorhandensein eines Entlüftungsventils des Wasserkreislaufs im Heizraum. Darüber hinaus ist selbstverständlich das Vorhandensein von Sicherheitseinrichtungen relevant, beispielsweise das Vorsehen eines Reglers mit oder ohne integrierter Sicherheitsabsperrarmatur.

Die Identifikation einer GDRM-Anlage, ihre Komponenten und konstruktiven Charakteristika sowie das Alter wesentlicher Komponenten werden als charakterisierende Daten erfasst und in einer Datenverarbeitungseinrichtung gespeichert. Darüber hinaus können aus bestimmten Primärdaten abgeleitete Sekundärdaten als charakterisierende Daten gespeichert werden. Beispielsweise kann zusätzlich zu den Altersangaben für jede Komponente der Anlage ein aus diesen verschiedenen Altersangaben berechnetes effektives Anlagenalter der Gasanlage ermittelt und als Teil der charakterisierenden Daten gespeichert werden. Die die Anlage charakterisierenden Daten können beispielsweise in einem vorgegebenen Datenformat Teil einer Datenbank sein, die Datensätze für sämtliche in eine Integritätsbewertung einzubeziehende Anlagen enthält. Die anlagenbezogenen Datensätze können beispielsweise Bestandteil einer zur Software SAP kompatiblen Anlagendokumentation sein.

Während des Betriebs der GDRM-Anlage werden darüber hinaus Betriebsereignisse erfasst und die erfassten Ereignisse als Werte gespeichert. Bei den erfassten Betriebsereignissen handelt es sich beispielsweise um Störungen, Messwerte oder betriebliche Meldungen. Störungen werden beispielsweise durch Sensoren erfasst, wobei aus den Sensorausgangssignalen automatisch Werte zur Speicherung abgeleitet werden können. Es ist aber auch möglich, dass bei erfassten Störungen vorgegebene Daten manuell vom Betriebspersonal eingegeben werden. Messwerte werden ebenfalls zu vorgegebenen Zeitpunkten von Sensoren erfasst, wobei deren Ausgangssignale in Werte umgewandelt werden, die dann als Daten gespeichert werden.

Das erfindungsgemäße Verfahren zum Überwachen einer Mehrzahl von Gasanlagen mit Hilfe einer Datenverarbeitungseinrichtung stützt sich auf diese gespeicherten, die Anlagen charakterisierenden Daten und die gespeicherten Werte, die erfasste Betriebsereignisse widerspiegeln. Aus den charakterisierenden Daten und den gespeicherten ereignisbezogenen Werten sowie aus weiteren Daten, die beispielsweise die Auslegung und Fahrweise, das Umfeld (Richtlinienänderung, Herstellerhinweise), die Kosten (Wartungs-/Störungsbehebungsaufwand) oder andere Charakteristika der GDRM-Anlage beschreiben (z.B. Lastwechsel/-frequenz oder Gasbegleitstoffe), werden Leitgrößen gewonnen, wobei jeweils ein Leitgrößenpaar aus einer Sicherheitsleitgröße und einer Zuverlässigkeitsleitgröße gebildet wird. Diese Leitgrößen werden anschließend mathematisch verknüpft, um aus den Sicherheitsleitgrößen einen Sicherheitswert und aus den Zuverlässigkeitsleitgrößen einen Zuverlässigkeitswert zu errechnen. Für jede GDRM-Anlage wird somit ein Wertepaar aus einem Zuverlässigkeitswert und einem Sicherheitswert gebildet. Anschließend werden der Sicherheitswert mit einem ersten Schwellwert und der Zuverlässigkeitswert mit einem zweiten Schwellwert verglichen, wobei in Abhängigkeit vom Über- oder Unterschreiten der beiden Schwellwerte ein Ausgabesignal erzeugt wird. Die Schritte des Gewinnens der Leitgrößen, des Errechnens des Sicherheitswerts und des Zuverlässigkeitswerts und des Vergleichens mit den Schwellwerten werden in vorgegebenen Abständen für jede GDRM-Anlage wiederholt.

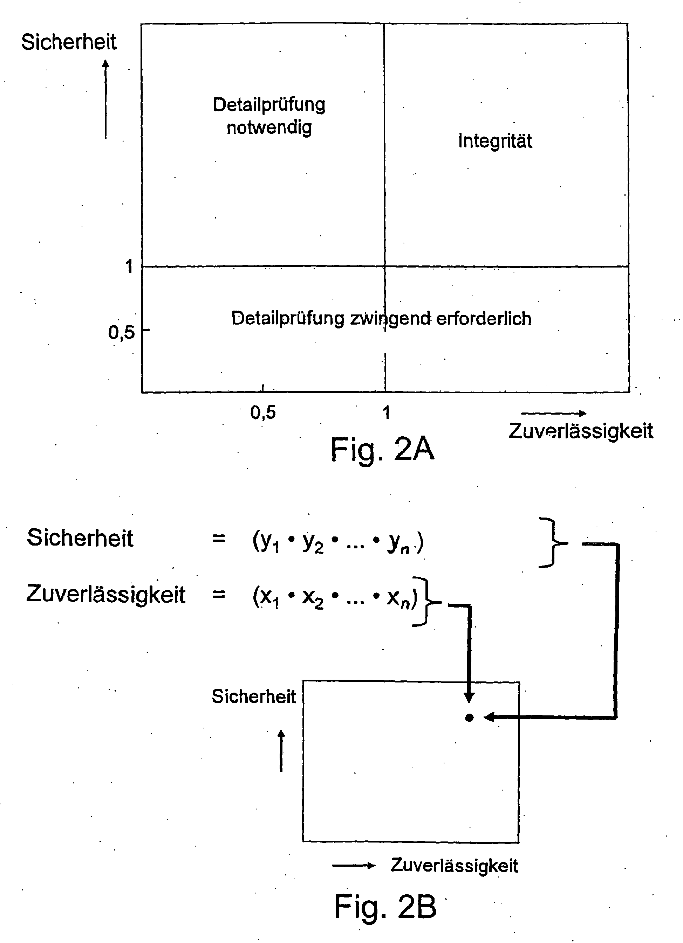

Die für eine Mehrzahl von GDRM-Anlagen jeweils gewonnenen Wertepaare aus Sicherheitswert und Zuverlässigkeitswert sowie die zugehörigen Schwellwerte lassen sich graphisch darstellen. Die Fig. 2A und 2B veranschaulichen graphisch das Berechnen des Sicherheitswerts und des Zuverlässigkeitswerts aus den zugehörigen Leitgrößen und die graphische Darstellung des so gewonnenen Wertepaars in Relation zu den Schwellwerten. In Fig. 2B sind zwei Formeln dargestellt, die die Verknüpfung der Sicherheitsleitgrößen $y_1$ bis $y_n$ bzw. die Verknüpfung der Zuverlässigkeits-

leitgrößen $x_1$ bis $x_n$ und die graphische Darstellung des so gewonnenen Wertepaars in einem zweidimensionalen Diagramm veranschaulichen. Die Leitgrößen werden miteinander multipliziert. Vorzugsweise sind die Leitgrößen Werte, die dann stärker von 1 abweichen, wenn der Einfluss der jeweiligen Leitgröße auf den gebildeten Sicherheits- bzw. Zuverlässigkeitswert stärker sein soll. Der berechnete Sicherheitswert und der berechnete Zuverlässigkeitswert bilden ein Wertepaar, das sich als Punkt in dem zweidimensionalen Sicherheits-Zuverlässigkeits-Diagramm darstellen läßt. Fig. 2B zeigt das Gewinnen des Punktes, während Fig. 2A die für den Vergleich gewählten Schwellwerte in dem Diagramm veranschaulicht. Fig. 2A zeigt als Schwellwerte für den Sicherheitswert und den Zuverlässigkeitswert jeweils den Wert 1, wobei dann, wenn sowohl der Sicherheitswert als auch der Zuverlässigkeitswert den Schwellwert 1 überschreiten, sich der die GDRM-Anlage charakterisierender Punkt in einem mit "Integrität" bezeichneten Bereich befindet. Befindet sich das der Anlage zugeordnete Wertepaar in diesem Bereich, so wird davon ausgegangen, dass die Integrität der Anlage einen Wert hat, der keine weitere Prüfung der Anlage erforderlich macht. Wird dagegen der Sicherheitsschwellwert von 1 unterschritten, so ist eine Detailprüfung (beispielsweise eine Instandhaltungsmaßnahme) zwingend erforderlich. Befindet sich ein die Anlage charakterisierendes Wertepaar in einem Bereich oberhalb des Sicherheitsschwellwerts 1 aber unterhalb des Zuverlässigkeitsschwellwerts 1, so ist ebenfalls eine Detailprüfung erforderlich, allerdings nicht mit der hohen Dringlichkeit wie beim Unterschreiten des Sicherheitsschwellwerts.

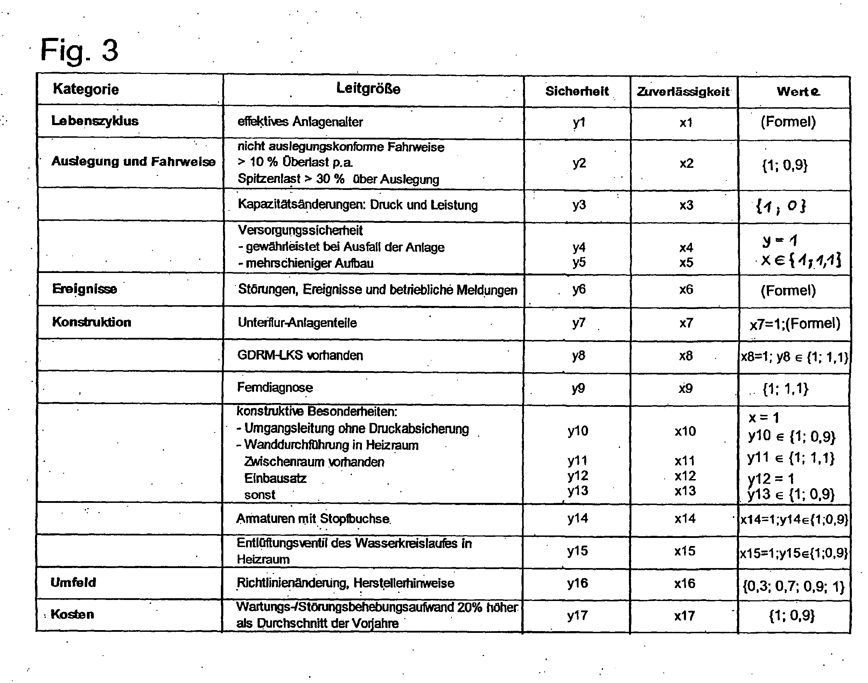

Die Werte der Leitgrößen werden unter Beachtung der Berechnungsvorschriften zum Berechnen des Sicherheitswerts und des Zuverlässigkeitswerts aufgrund gewonnener Erfahrungen so gewählt, dass sich eine den Erfahrungen entsprechende Beeinflussung des Sicherheitswerts bzw. des Zuverlässigkeitswerts ergibt. Die bei einem bevorzugten Ausführungsbeispiel gewählten Leitgrößen, d.h. die Sicherheitsleitgrößen $y_i$ und die Zuverlässigkeitsleitgrößen $x_i$, sowie deren Werte werden nachfolgend anhand von Fig. 3 beispielhaft veranschaulicht.

Die in Fig. 3 veranschaulichten bevorzugten Leitgrößen lassen sich sechs Kategorien, nämlich Lebenszyklus, Auslegung und Fahrweise, Ereignisse, Konstruktion, Umfeld und Kosten, zuordnen. Jeder Kategorie sind bei dem dargestellten Beispiel eine oder mehrere Leitgrößen zugeordnet, wobei die Zuordnung der Leitgrößen zu den einzelnen Kategorien für das erfindungsgemäße Verfahren ohne Bedeutung ist und lediglich der Veranschaulichung dient. Jede Leitgröße umfaßt ein Leitgrößenpaar aus einer Sicherheitsleitgröße ($y_i$)und einer Zuverlässigkeitsleitgröße ($x_i$). Bei dem dargestellten Ausführungsbeispiel werden den meisten Leitgrößen aus Gründen der Vereinfachung der Berechnungen und der Datenverarbeitung lediglich einer von drei Werten, nämlich 0,9 oder 1,0 oder 1,1, zugeordnet. Es ist klar, dass ein Leitgrößenwert von 1,0 in Verbindung mit der in Fig. 2B angegebenen Berechnungsvorschrift keinen Einfluss auf den Zuverlässigkeits- bzw. Sicherheitswert hat. Ein Leitgrößenwert von 1,0 kann auch in der Berechnung fortgelassen werden. Bei einer mathematisch äquivalenten Darstellung könnten bei der in Fig. 3 dargestellten Tabelle diejenigen Tabellenfelder leer bleiben, denen ein Leitgrößenwert von 1,0 zugeordnet ist. Leitgrößen, die einen stärkeren Einfluß auf den Sicherheitswert bzw. den Zuverlässigkeitswert haben, werden Werte zugeordnet, die kleiner als 0,9 oder größer als 1,1 sein können. Dies betrifft beispielsweise die nachfolgend näher erläuterten Leitgrößen $y_1$, $x_1$, $y_3$, $x_3$, $y_6$, $x_6$, $y_7$, $x_7$ und $y_{16}$, $x_{16}$. Die Auswahl der die Sicherheits- und Zuverlässigkeitswerte mitbestimmenden Leitgrößen sowie die Wahl der zugeordneten Werte beruhen auf Betriebserfahrungen und statistischen Auswertungen an einer Vielzahl vorhandener GDRM-Anlagen. Im einzelnen wurden folgende bevorzugte Leitgrößen ausgewählt und Werte ermittelt.

Das effektive Anlagenalter ($y_1$, $x_1$) wird vorzugsweise nach folgender Formel bestimmt:

$$y_1 = x_1 = 1 + \frac{1}{100} * \left[ \frac{1}{6} * \sum_{i=1}^{6} (BaujahrKomponenteZ^i) - (aktuellesJahr) \right],$$

wobei zur Bestimmung des effektiven Anlagenalters das Alter von sechs wesentlichen Bauteilen, nämlich Filter, Regler, Messung, Gebäude, Heizkessel und Wärmetauscher, herangezogen wird. Bei einer neuen Anlage ergibt sich im Baujahr ein Wert $y_1 = x_1 = 1$. Mit zunehmenden Alter der Anlage sinken die Werte. Bei einem Durchschnittsalter der genannten sechs Komponenten von beispielsweise 10 Jahren ergäbe sich ein Wert $y_1 = x_1 = 0,9$.

In der nächsten Zeile gemäß Fig. 3 ist die Leitgröße der nichtauslegungskonformen Fahrweise genannt. Wenn eine GDRM-Anlage mit mehr als 10 % Überlast pro Jahr oder einer Spitzenlast von mehr als 30 % über der Auslegung gefahren wird (wobei die Prozentwerte an die Anlage und Betriebserfahrungen angepasst werden können), so erhält die Leitgröße $y_2 = x_2$ einen Wert von 0,9, was zu einer entsprechenden Absenkung des Sicherheitswert bzw. des Zuverlässigkeitswert um 10 % führt.

Die nächste der Kategorie "Auslegung und Fahrweise" zugeordnete Leitgröße "Kapazitätsänderungen: Druck und Leistung" hat in der Regel einen Wert von 1,0, d.h., sie ist ohne Einfluss. Wird jedoch eine Kapazitätsänderung über der Auslegungsleistung erfasst, so wird dieser Leitgröße ein Wert von 0 zugeordnet. Dies wiederum bedeutet jedoch, dass sowohl der Sicherheitswert als auch der Zuverlässigkeitswert auf 0 absinken (und sämtliche andere Leitgrößen ohne Einfluss bleiben). Mit anderen Worten, eine Kapazitätsänderung über Auslegungsleistung führt bei der nächsten Abarbeitung der erfindungsgemäßen Verfahrensschritte zwangsläufig zur Ausgabe eines Signals, das die Unterschreitung beider Schwellwerte anzeigt. Die Integrität der Anlage ist nicht gegeben und es sind unmittelbar Maßnahmen einzuplanen. Ein typisches Beispiel ist ein nicht auslegungskonformer Überdruck in der Anlage.

Die beiden nächsten bei dem Ausführungsbeispiel in Fig. 3 genannten Leitgrößen betreffen die Versorgungssicherheit. Diese Leitgröße hat lediglich einen Einfluss auf die Zuverlässigkeit, so dass den Leitgrößen $y_4$ und $y_5$ jeweils der Wert 1 zugeordnet wird, der ohne Einfluss auf den Sicherheitswert ist. Ist die Versorgungssicherheit bei Ausfall der Anlage gewährleistet, so wird der Zuverlässigkeitsleitgröße $x_4$ ein Wert von 1,1 zugeordnet. Gleiches gilt bei vorhandenem mehrschienigen Aufbau für die Zuverlässigkeitsleitgröße $x_5$. Diese Zuverlässigkeitsleitgrößen erhöhen somit die Zuverlässigkeit um jeweils 10 %, sofern die entsprechenden Bedingungen vorliegen. Anderenfalls erhalten sie ebenfalls einen Wert von 1,0 und sind ohne Einfluß auf den Zuverlässigkeitswert. Letztendlich kommt in dieser Zuverlässigkeitsleitgröße der Gedanke zum Ausdruck, dass bei gewährleisteter Versorgungssicherheit bei Ausfall der Anlage oder einer Strecke einer mehrschienigen Anlage ein solcher Ausfall eher hingenommen werden kann. Der Anlage wird somit ein höherer Integritätswert zugeordnet, was beispielsweise dazu führt, dass Instandhaltungsmaßnahmen weniger häufig durchzuführen sind.

Die nächste in Fig. 3 genannte Leitgröße stellen "Störungen, Ereignisse und betrieblichen Meldungen" dar. Bei einem Ausführungsbeispiel werden Störungen drei Kategorien A, B und C zugeordnet, wobei Störungen der Kategorie A sowohl sicherheits- als auch zuverlässigkeitsrelevant sind und Störungen der Kategorien B und C lediglich zuverlässigkeitsrelevant sind. Störungen der Kategorie A sind beispielsweise unkontrollierte Gasaustritte. Störungen der Kategorie B sind beispielsweise Regeldruckabweichungen und Unterbrechungen des Gasflusses und Störungen der Kategorie C sind beispielsweise eine Störmenge oder Störung der Vorwärmung. Die Sicherheitsleitgröße $y_6$ berechnet sich zu:

$$y_6 = \frac{2}{(1 + 5 * [AnzahlStörungenA])}$$

Die Zuverlässigkeitsleitgröße $x_6$ berechnet sich zu:

$$x_6 = \frac{2}{(1 + 5 * [AnzahlStörungenA] + [AnzahlStörungenB] + 0,2 * [AnzahlStörungenC])}$$

Liegen somit noch keine Störungen vor, so haben die Leitgrößen eine Wert von 2, was den Sicherheitswert bzw. den Zuverlässigkeitswert verdoppelt. Eine Störung der Kategorie A führt zu einer Sicherheitsleitgröße $y_6$ von 0,3, was den Sicherheitswert auf 30 % des Ausgangswerts heruntersetzt. Gleiches gilt für den Zuverlässigkeitswert, wobei zu beachten ist, dass Störungen der Kategorie B einen etwa fünfmal geringeren Einfluss und Störungen der Kategorie C einen etwa fünfundzwanzigmal geringeren Einfluss haben.

Die in Fig. 3 als nächstes genannte Leitgröße "Unterflur-Anlagenteile" in der Kategorie "Konstruktion" berücksichtigt das Vorhandensein und das Alter von Unterflur-Anlagenteilen, wobei dies nur einen Einfluss auf den Sicherheitswert ausübt. Die Zuverlässigkeitsleitgröße $x_7$ hat den Wert 1, ist also ohne Einfluss (und kann ggf. auch entfallen). Die Sicherheitsleitgröße $y_7$ berechnet sich zu:

$$y_7 = 1 + 1/100 \text{ (Baujahr ältestes Unterflurbauteil - aktuelles Jahr)}.$$

Bei dem bevorzugten Ausführungsbeispiel gemäß der genannten Formel hat lediglich das Alter des ältesten Unterflurbauteils eine Einfluss auf den Sicherheitswert. Hat dieses beispielsweise ein Alter von 10 Jahren, so ergibt sich ein Wert für $y_7$ von 0,9.

In den nachfolgenden Zeilen der Tabelle gemäß Fig. 3 sind eine Reihe von Leitgrößen aufgelistet, die der Kategorie "Konstruktion" zugeordnet sind. Die Leitgröße "GDRM-LKS vorhanden" (lokaler Korrosionsschutz für eine Gasdruckregel- und -messanlage vorhanden) hat keinen Einfluss auf den Zuverlässigkeitswert ($x_8 = 1$), aber kann bei Vorhandensein den Sicherheitswert um 10 % erhöhen ($y_8 = 1,1$). Das Vorhandensein einer "Ferndiagnose" erhöht sowohl den Sicherheitswert als auch den Zuverlässigkeitswert um 10 % ($y_9 = x_9 = 1,1$). Die nachfolgenden in der Kategorie "Konstruktion" genannten Leitgrößen haben lediglich einen Einfluss auf den Sicherheitswert, nicht aber auf den Zuverlässigkeitswert ($x_{10} = x_{11} = x_{12} = x_{13} = x_{14} = x_{15} = 1$). Ist eine "Umgangsleitung ohne Druckabsicherung" vorhanden, senkt dies den Sicherheitswert um 10 % ($y_{10} = 0,9$). Ein vorhandener Zwischenraum bei einer Wanddurchführung in den Heizraum erhöht den Sicherheitswert ($y_{11}$ = 1,1). Der Sicherheitsleitgröße $y_{12}$ ist bei dem dargestellten Beispiel ein Wert von 1 und der Sicherheitsleitgröße $y_{13}$ ein Wert von 0,9 zugeordnet. Wenn "Armaturen mit Stopfbuchse" vorhanden sind, bei denen die Spindelabdichtung eine Schwachstelle darstellt, senkt dies den Sicherheitswert um 10 % ($y_{14}$ = 0,9). Wenn ein Entlüftungsventil des Wasserkreislaufs in den Heizraum führt, senkt dies ebenfalls den Sicherheitswert um 10 % ($y_{15}$ = 0,9).

In der Kategorie "Umfeld" findet sich die Leitgröße "Richtlinienänderung, Herstellerhinweise". Diese Richtlinienänderungen und Herstellerhinweise werden ebenfalls drei Kategorien, Kategorie A, B und C zugeordnet, wobei die der Kategorie A zugeordneten Hinweise sowohl sicherheits- als auch zuverlässigkeitsrelevant sind (beispielsweise eine Leckage in Vergleichsanlagen). Ein Hinweis der Kategorie A führt dazu, dass der Sicherheitswert auf 30 % sinkt ($y_{16}$ = 0,3) und der Zuverlässigkeitswert ebenfalls auf 30 % sinkt ($x_{16}$ = 0,3). Die Hinweise der Kategorien B und C sind lediglich zuverlässigkeitsrelevant ($y_{16}$ = 1). Ein Hinweis der Kategorie B (z.B. SAV fällt unkontrolliert) senkt den Zuverlässigkeitswert auf 70 % ($y_{16}$ = 0,7), ein Hinweis in der Kategorie C senkt den Sicherheitswert auf 90 % ($y_{16}$ = 0,9). Liegen Hinweise sowohl in Kategorie B als auch in Kategorie C vor, so ergibt sich ein Wert für $y_{16}$ von 0,7 * 0,9.

Schließlich ist bei dem in Fig. 3 dargestellten Ausführungsbeispiel noch eine Leitgröße "Wartungs-/Störungsbehebungsaufwand 20 % höher als der Durchschnitt der Vorjahre" der Kategorie "Kosten" zugeordnet. Wenn dieser Wartungs-/Störungsbehebungsaufwand 20 % höher ist als der Durchschnitt der Vorjahre, so werden sowohl der Sicherheitswert als auch der Zuverlässigkeitswert um 10 % gesenkt ($y_{17}$ = $x_{17}$ = 0,9).

Es sei darauf hingewiesen, dass Fig. 3 lediglich ein bevorzugtes Ausführungsbeispiel wiedergibt. In Abhängigkeit von der Art der Anlagen und in Abhängigkeit von zukünftigen Erfahrungen können weitere Leitgrößen gewählt und/oder andere Werte zugeordnet werden. Darüber hinaus sei angemerkt, dass die gewählten Werte der miteinander multiplizierten Sicherheits- und Zuverlässigkeitsleitgrößen selbstverständlich in einem engen mathematischen Zusammenhang zu der Wahl der jeweiligen Schwellwerte stehen. Bei dem in Fig. 3 dargestellten Ausführungsbeispiel liegt ein bevorzugter Schwellwert bei 1,0. Dieser Wert wird jeweils dann unterschritten, wenn die die Sicherheit und Zuverlässigkeit verringernden Leitgrößen-Faktoren gegenüber den erhöhenden Faktoren überwiegen.

Bei alternativen Ausführungsformen können auch mehr oder weniger Leitgrößen gewählt werden. Beispielsweise können weniger Leitgrößen gewählt werden, wenn der Datenerfassungsaufwand und der Berechnungsaufwand gesenkt werden sollen. Jedoch verringert sich mit einer geringeren Anzahl der berücksichtigten Leitgrößen auch die Aussagekraft der Sicherheits- und Zuverlässigkeitswerte. Die in Fig. 3 dargestellten Leitgrößen lassen sich nach ihrer Wichtigkeit (Priorität) wie folgt ordnen: 1. effektives Anlagenalter; 2. Störungen, betriebliche Meldungen und Ereignisse; 3. Unterflur-Anlagenteile; 4. konstruktive Besonderheiten; 5. Armaturen mit Stopfbuchse; 6. Entlüftungsventil des Wasserkreislaufs in Heizraum; 7. nichtauslegungskonforme Fahrweise; 8. GDRM-LKS vorhanden; 9. Richtlinienänderung, Herstellerhinweise; 10. Wartungsaufwand und Störungsbehebungskosten; 11. Kapazitätsänderungen; 12. Versorgungssicherheit und 13. Ferndiagnose.

Weitere, nicht in Fig. 3 angegebene Leitgrößen können sich beispielsweise aus folgenden Einflüsse ergeben: Lastwechsel/-frequenz, Gasbegleitstoffe, bisherige Betriebserfahrungen (qualitativ), Vergleichsanlagen, Aufbau der Anlagenkomponenten, Überwachungsfristen, Erfahrungen anderer Versorger, Sensorik (Schall, Schwingungen, Temperatur, Druckdifferenzen, Außeneinflüsse, Gasqualitäten), Sicherheitsabstände zur nächsten Bebauung, Schulung des Personals, nächster Absperrschieber, Alarmierung einer Bereitschaft, Qualitätsmanagementsystem/Betriebsanweisungen, Korrosionsschutz, etc.

Bei der Durchführung des erfindungsgemäßen Verfahrens werden unter anderem für jede Gasanlage die Leitgrößen gewonnen. Die Leitgrößen werden dabei entweder direkt aus vorhandenen Daten abgeleitet oder berechnet oder aus manuellen Eingaben und/oder erfassten Meßwerten abgeleitet. Beispielsweise werden die der Kategorie "Lebenszyklus" und der Kategorie "Konstruktion" zugeordneten Leitgrößen in der Regel aus Daten abgeleitet, die die Anlage charakterisieren. Die die Ereignisse betreffenden Leitgrößen werden aus Störungsmeldungen (beispielweise manuell erfasst) oder Messwerten abgeleitet. Die anderen Leitgrößen werden vorrangig aus Daten abgeleitet, die während des Betriebs der Anlage manuell eingegeben, durch Datenübertragung zur Verfügung gestellt oder automatisch erfasst werden.

Die Berechnung der Zuverlässigkeitswerte und Sicherheitswerte folgt programmgesteuert zu vorgegebenen Zeitpunkten, wobei die zugehörigen Leitgrößen, sofern sie noch nicht vorhanden sind, ebenfalls vorab berechnet werden.

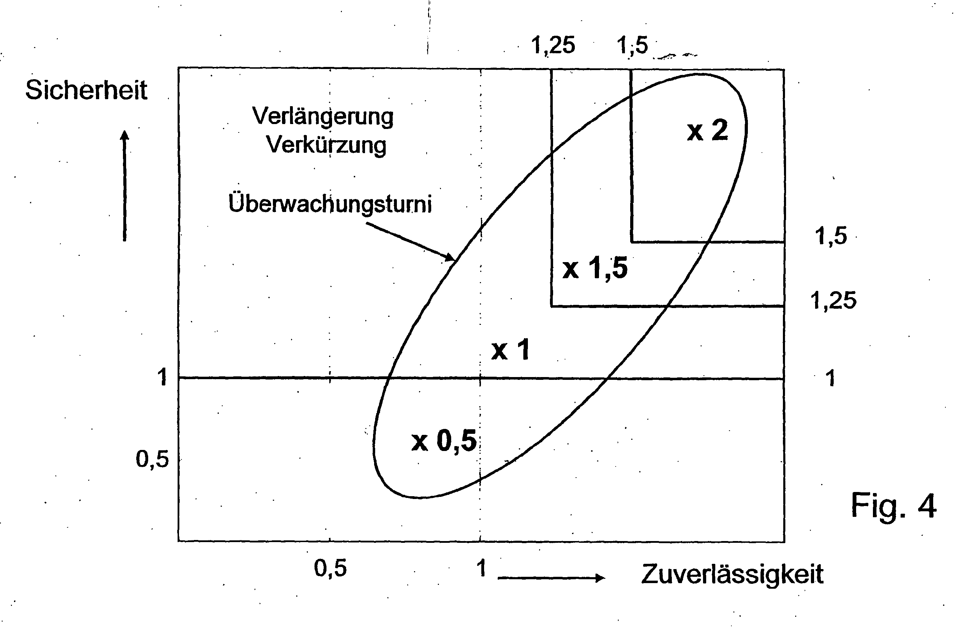

Fig. 4 ist eine grafische Darstellung, die veranschaulicht, wie aus dem Überschreiten vorgegebener Schwellwerte durch die Sicherheits- und Zuverlässigkeitswerte Faktoren für eine Verlängerung von Überwachungsintervallen abgeleitet werden. Wie bereits einleitend erwähnt, ist es zur Einhaltung von Instandhaltungsvorschriften beispielsweise erforderlich, Gasanlagen regelmäßig, d.h. in vorgegebenen Zeitabständen, einer Sichtkontrolle oder Inspektion zu unterziehen. Dies findet im Rahmen einer vorbeugenden Instandhaltung statt. Um die Kosten einer solchen Instandhaltung zu verringern, wäre es beispielsweise denkbar, die zeitlichen Abstände zwischen diesen Instandhaltungsmaßnahmen zu verlängern. Dies birgt jedoch die Gefahr in sich, dass die Abstände für Anlagen mit einer geringen Integrität zu lang werden, so dass die Gefahr von Havarien oder Ausfällen steigt. Um dies zu verhindern, sollten die Überwachungsintervalle in Abhängigkeit vom Zustand der Anlagen festgelegt werden. Dazu kann das erfindungsgemäße Verfahren dienen.

Wie es in Fig. 4 dargestellt ist, werden dem Sicherheits-Zuverlässigkeits-Diagramm, wie es in Fig. 2 dargestellt ist, mehrere Schwellwerte zugeordnet. Die den Anlagen zugeordneten Paare aus Sicherheitswert und Zuverlässigkeitswert, die bestimmte Punkte in dem Diagramm definieren, können oberhalb oder unterhalb der Schwellwerte liegen. Liegen sie beispielsweise über einem Sicherheitsschwellwert von 1 (vgl. Fig. 4), aber unterhalb eines Zuverlässigkeitsschwellwerts von 1,25 und unterhalb eines Sicherheitsschwellwerts von 1,25, so werden die Überwachungszeiträume weder verlängert noch verkürzt; dies ist durch den Faktor "x 1" dargestellt. Liegt jedoch ein einer GDRM-Anlage zugeordneter Punkt, d.h. Sicherheitswert-Zuverlässigkeits-Paar, oberhalb der Schwellwerte von 1,25, aber noch unterhalb der Schwellwerte von 1,5, so wird der Überwachungszeitraum auf das 1,5-fache verlängert (dargestellt durch "x 1,5"). Und liegt der Punkt sogar oberhalb der Schwellwerte von 1,5, so wird der Überwachungszeitraum verdoppelt (dargestellt durch "x 2"). Wenn dagegen der Anlage ein Sicherheitswert-Zuverlässigkeitswert-Paar zugeordnet ist, dass (unabhängig vom Zuverlässigkeitswert) unterhalb des Sicherheitsschwellwerts 1 liegt, so wird gemäß der Darstellung in Fig. 4 der Überwachungszeitraum halbiert (dargestellt durch "x 0,5").

Die in Fig. 4 dargestellte Vorgehensweise beschreibt praktisch eine Übergang von einer nur vorbeugenden Instandhaltung zu einer mehr zustandsorientierten Instandhaltung. Dies senkt die Kosten der Instandhaltung. Das erfindungsgemäße Verfahren wird bei dem in Fig. 4 dargestellten Ausführungsbeispiel beispielsweise dahingehend weitergebildet, dass in regelmäßigen Abständen für sämtliche zu überwachenden Anlagen das Sicherheitswert-Zuverlässigkeitswert-Paar neu berechnet und als Punkt in einer grafischen Ausgabe dargestellt wird, wobei gleichzeitig automatisch überwacht wird, ob die in Fig. 4 dargestellten Schwellwerte über- bzw. unterschritten werden. Wird durch Überschreiten bzw. Unterschreiten der Schwellwerte eine Verlängerung bzw. Verkürzung der Überwachungsturni erforderlich, so erfolgt eine entsprechende Ausgabe an den Bediener bzw. den Betreiber, beispielsweise eine automatische Verschiebung eines in einem elektronischen Kalender gespeicherten Termins einer eingeplanten Instandhaltungsmaßnahme.

**Patentansprüche**

1. Verfahren zum Überwachen einer Mehrzahl von Gasanlagen, mit Hilfe einer Datenverarbeitungseinrichtung, wobei für jede Gasanlage (1):

   a1) die Gasanlage (1) charakterisierende Daten erfasst und gespeichert werden, wobei die charakterisierenden Daten zumindest das Alter von Bestandteilen (4 - 9) der Gasanlage (1) beschreiben,
   a2) wenigstens ein Betriebsereignis der Gasanlage (1) erfasst wird,
   a3) zumindest aus den charakterisierende Daten ein effektives Anlagenalter der Gasanlage ermittelt wird,
   **dadurch gekennzeichnet, dass,**
   b) mehrere Leitgrößen gewonnen werden, indem zumindest

      b1) aus dem effektiven Lebensalter wenigstens eine erste Leitgröße abgeleitet wird, und
      b2) aus dem erfassten Betriebsereignis der Gasanlage (1) wenigstens eine zweite Leitgröße abgeleitet wird, und

   c) aus den Leitgrößen der Gasanlage (1) ein Sicherheitswert und ein Zuverlässigkeitswert errechnet werden, und
   d) der Sicherheitswert mit einem ersten Schwellwert und der Zuverlässigkeitswert mit einem zweiten Schwellwert verglichen werden, wobei in Abhängigkeit von Über- oder Unterschreiten der beiden Schwellwerte ein Ausgabesignal erzeugt wird,

   und dass die Schritte b) bis d) in vorgegebenen Abständen wiederholt werden.

2. Verfahren nach Anspruch 1, **dadurch gekennzeichnet, dass** im Schritt d) das Ausgabesignal erzeugt wird, wenn der Sicherheitswert den ersten Schwellwert unterschreitet und/oder wenn der Zuverlässigkeitswert den zweiten Schwellwert unterschreitet.

3. Verfahren nach Anspruch 1 oder 2, **dadurch gekennzeichnet, dass** das Ausgabesignal die Notwendigkeit einer vorbeugenden Instandhaltungsmaßnahme anzeigt.

4. Verfahren nach Anspruch 1, **dadurch gekennzeichnet, dass** ein Ausgabesignal dann erzeugt wird, wenn sowohl der Sicherheitswert den ersten Schwellwert überschreitet als auch der Zuverlässigkeitswert den zweiten Schwellwert überschreitet, wobei das Ausgabesignal eine Verlängerung eines Intervalls zwischen vorgegebenen vorbeugenden Instandhaltungsmaßnahmen um einen ersten Faktor anzeigt.

**5.** Verfahren nach Anspruch 4, **dadurch gekennzeichnet, dass** der Sicherheitswert mit einem dritten Schwellwert und der Zuverlässigkeitswert mit einem vierten Schwellwert verglichen wird, wobei dann, wenn der Sicherheitswert den dritten Schwellwert überschreitet und der Zuverlässigkeitswert den vierten Schwellwert überschreitet, ein zweites Ausgabesignal erzeugt wird, das die Verlängerung des Intervalls zwischen den vorgegebenen vorbeugenden Instandhaltungsmaßnahmen um einen zweiten Faktor anzeigt, wobei der dritte Schwellwert größer als der erste Schwellwert und der vierte Schwellwert größer als der zweite Schwellwert ist und wobei der zweite Faktor größer als der erste Faktor ist.

**6.** Verfahren nach einem der Ansprüche 1 bis 5, **dadurch gekennzeichnet, dass** jede Leitgröße ein normiertes Maß ist, wobei eine Leitgröße mit dem Wert 1 keinen Einfluss auf den Sicherheitswert oder den Zuverlässigkeitswert hat, eine Leitgröße, die größer als 1 ist, den Sicherheitswert bzw. Zuverlässigkeitswert erhöht und eine Leitgröße, die kleiner als 1 ist, den Sicherheitswert bzw. Zuverlässigkeitswert verringert, und
dass der Sicherheitswert und der Zuverlässigkeitswert im Schritt c) durch Multiplikation sämtlicher Leitgrößen errechnet werden.

**7.** Verfahren nach Anspruch 6, **dadurch gekennzeichnet, dass** der erste und der zweite Schwellwert gleich 1 sind.

**8.** Verfahren nach einem der Ansprüche 1 bis 7, **dadurch gekennzeichnet, dass** die wenigstens eine erste, die wenigstens eine zweite sowie jede weitere Leitgröße ein Leitgrößenpaar aus einer Sicherheitsleitgröße und einer Zuverlässigkeitsleitgröße umfassen, wobei der Sicherheitswert aus den Sicherheitsleitgrößen und der Zuverlässigkeitswert aus den Zuverlässigkeitsleitgrößen errechnet wird.

**9.** Verfahren nach einem der Ansprüche 1 bis 8, **dadurch gekennzeichnet,**
**dass** die die Gasanlage (1) charakterisierenden Daten ferner die konstruktive Gestaltung der Gasanlage (1) beschreiben, und dass im Schritt b):

b3) aus den charakterisierenden Daten, die die konstruktive Gestaltung der Gasanlage (1) beschreiben, wenigstens eine dritte Leitgröße abgeleitet wird.

**10.** Verfahren nach Anspruch 9, **dadurch gekennzeichnet, dass** die die konstruktive Gestaltung beschreibenden charakterisierenden Daten unter anderem das Vorhandensein und das Alter von Unterflur-Anlagenbauteilen beschreiben, wobei eine den Sicherheitswert verringernde Leitgröße aus dem Alter des ältesten Unterflur-Anlagenbauteils abgeleitet wird.

**11.** Verfahren nach Anspruch 9, **dadurch gekennzeichnet, dass** die die konstruktive Gestaltung beschreibenden charakterisierenden Daten sicherheitsrelevante und/oder zuverlässigkeitsrelevante konstruktive Besonderheiten der Gasanlage (1) beschreiben.

**12.** Verfahren nach Anspruch 11, **dadurch gekennzeichnet, dass** die Gasanlagen (1) GDRM-Anlagen sind und die die konstruktive Gestaltung der GDRM-Anlage beschreibenden charakterisierenden Daten umfassen:

- Daten, die das Vorhandensein eines lokalen Korrosionsschutzes kennzeichnen,
- Daten, die die Möglichkeit einer Ferndiagnose kennzeichnen,
- Daten, die das Vorhandensein von Armaturen mit Stopfbuchsen kennzeichnen, und
- Daten, die weitere konstruktive Besonderheiten, wie beispielsweise eine Umgangsleitung ohne Druckabsicherung, eine Wanddurchführung in einem Heizraum und das Vorhandensein eines Zwischenraums, beschreiben.

**13.** Verfahren nach einem der Ansprüche 1 bis 12, **dadurch gekennzeichnet, dass** im Schritt b):

b4) die Betriebsweise der Gasanlage (1) charakterisierende Daten erfasst werden und daraus wenigstens eine vierte Leitgröße abgeleitet wird.

**14.** Verfahren nach Anspruch 13, **dadurch gekennzeichnet, dass** die die Betriebsweise charakterisierenden Daten eine überdurchschnittliche und/oder nicht auslegungskonforme Fahrweise der Gasanlage (1) beschreiben und die daraus abgeleitete Leitgröße zu einer Verringerung des Sicherheitswerts und des Zuverlässigkeitswerts führt.

**15.** Verfahren nach einem der Ansprüche 1 bis 14, **dadurch gekennzeichnet, dass** während des Betriebs der Gasanlage (1) eingehende sicherheits- und/oder zuverlässigkeitsrelevante Informationen über den Betrieb gleicher oder vergleichbarer Gasanlagen eingehen und erfasst werden und daraus wenigstens eine fünfte Leitgröße abgeleitet wird.

**16.** Verfahren nach einem der Ansprüche 1 bis 15, **dadurch gekennzeichnet, dass** im Schritt b2) wenigstens ein Betriebsereignis der Gasanlage (1) durch wenigstens einen an der Gasanlage (1) installierten Sensor erfasst wird.


**Claims**

**1.** Method for monitoring a plurality of gas plants, with the aid of a data processing facility, wherein for each gas plant (1):

a1) data characterising the gas plant (1) are recorded and stored, the characterising data describing at least the age of components (4 to 9) of the gas plant (1);
a2) at least one operating occurrence of the gas plant (1) is recorded,
a3) an effective plant age of the gas plant is determined at least from the characterising data,

**characterised in that,**

b) several reference values are established, by at least

b1) deriving at least one reference value from the effective age and
b2) by deriving at least a second reference value from the recorded operating occurrence of the gas plant (1) and

c) by calculating a safety value and a reliability value from the reference values of the gas plant (1) and
d) the safety value is compared with a first threshold value and the reliability value with a second threshold value, an output signal being generated depending on the exceeding or undershooting of the two threshold values, and that the steps b) to d) are repeated at given intervals.

**2.** Method according to claim 1, **characterised in that** in the step d) the output signal is generated when the safety value undershoots the first threshold value and/or when the reliability value undershoots the second threshold value.

**3.** Method according to claim 1 or 2, **characterised in that** the output signal indicates that preventive maintenance work is necessary.

**4.** Method according to claim 1, **characterised in that** an output signal is generated when both the safety value exceeds the first threshold value and the reliability value exceeds the second threshold value, the output signal indicating that an interval between the given preventive maintenance work measures is extended by a first factor.

**5.** Method according to claim 4, **characterised in that** the safety value is compared with a third threshold value and the reliability value with a fourth threshold value, wherein if the safety value exceeds the third threshold value and the reliability value exceeds the fourth threshold value, a second output signal is generated which indicates that the interval between the given preventive maintenance work measures is extended by a second factor, the third threshold value being greater than the first threshold value and the fourth threshold value being greater than the second threshold value and the second factor being greater than the first factor.

**6.** Method according to any one of claims 1 through 5, **characterised in that** each reference value is a standardized unit of measure, one reference value with the value 1 having no influence on the safety value or the reliability value, a reference value which is greater than 1 increasing the safety value or the reliability value and a reference value which is less than 1 reducing the safety value or the reliability value and
that the safety value and the reliability value are calculated in step c) by multiplying all reference values.

**7.** Method according to claim 6, **characterised in that** the first and the second threshold values are equal to 1.

**8.** Method according to any one of claims 1 through 7, **characterised in that** the at least one first, the at least one second as well as each further reference value comprise a reference value pair made up of a safety reference value and a reliability reference value, the safety value being calculated from the safety reference values and the reliability value being calculated from the reliability reference values.

9. Method according to any one of claims 1 through 8, **characterised in that** the data characterising the gas plant (1) further describe the design of the gas plant (1) and that in step b):

b3) at least one third reference value is derived from the characterising data which describe the design of the gas plant (1).

10. Method according to claim 9, **characterised in that** the characterising data describing the design describe among other things the existence and the age of underground plant components, a reference value reducing the safety value being derived from the age of the oldest underground plant component.

11. Method according to claim 9, **characterised in that** the characterising data describing the design describe safety-relevant and/or reliability-relevant special design features of the gas plant (1).

12. Method according to claim 11, **characterised in that** the gas plants (1) are gas pressure regulating and measuring plants and the characterising data describing the design of the gas pressure regulating and measuring plant comprise:

- data which characterise the existence of local corrosion protection,
- data which characterise the possibility of remote diagnosis,
- data which characterise the existence of valves with glands and data which describe other special design features, such as a bypass line without overpressure protection, a wall entry in a boiler room and the existence of an interspace.

13. Method according to any one of claims 1 through 12, **characterised in that** in step b):

b4) the data characterising the mode of operation of the gas plant (1) are recorded and that at least one fourth reference value is derived therefrom.

14. Method according to claim 13, **characterised in that** the data characterising the mode of operation describe an above-average and/or non-design-conform operation of the gas plant (1) and the reference value derived therefrom leads to a reduction in the safety value and the reliability value.

15. Method according to any one of claims 1 through 14, **characterised in that** safety-relevant and/or reliability-relevant information received during the operation of the gas plant (1) on the operation of the same or similar gas plants are recorded and at least one fifth reference value is derived therefrom.

16. Method according to any one of claims 1 through 15, **characterised in that** in the step b2) at least one operating occurrence of the gas plant (1) is recorded by at least one sensor installed in the gas plant (1).


**Revendications**

1. Procédé pour la surveillance d'une pluralité d'installations à gaz à l'aide d'un système de traitement de données, où, pour chaque installation à gaz,

a1) des données caractéristiques de l'installation à gaz (1) sont saisies et mises en mémoire, les données caractéristiques décrivant au moins l'âge de composants (4 à 9) de l'installation à gaz (1),
a2) au moins un événement d'exploitation de l'installation à gaz (1) est saisi,
a3) à partir des données caractéristiques, un âge effectif de l'installation à gaz est au moins déterminé,

**caractérisé par le fait que**

b) plusieurs grandeurs déterminantes sont captées, où au moins

b1) à partir de l'âge effectif, au moins une première grandeur déterminante est dérivée, et
b2) à partir de l'événement d'exploitation de l'installation à gaz (1) saisi, au moins une deuxième grandeur déterminante est dérivée, et

c) à partir des grandeurs déterminantes de l'installation à gaz (1), un coefficient de sécurité et un coefficient de fiabilité sont calculés, et

d) le coefficient de sécurité est comparé avec un premier seuil limite et le coefficient de fiabilité est comparé avec un deuxième seuil limite, où, en fonction du franchissement des deux seuils limites à la hausse ou à la baisse, un signal de sortie est généré, et les étapes b) à d) sont répétées à des intervalles prédéterminés.

2. Procédé suivant la revendication 1, **caractérisé par le fait que**, lors de l'étape d), le signal de sortie est généré lorsque le coefficient de sécurité franchit le premier seuil limite à la baisse et/ou le coefficient de fiabilité franchit de deuxième seuil limite à la baisse.

3. Procédé suivant l'une des revendications 1 ou 2, **caractérisé par le fait que** le signal de sortie indique la nécessité pour procéder à une mesure de maintenance préventive.

4. Procédé suivant la revendication 1, **caractérisé par le fait qu'**un signal de sortie est généré lorsque non seulement le coefficient de sécurité franchit le premier seuil limite à la hausse, mais aussi le coefficient de fiabilité franchit de deuxième seuil limite à la hausse, le signal de sortie indiquant un prolongement d'un intervalle entre des mesures de maintenance préventive préfixées d'un premier facteur.

5. Procédé suivant la revendication 4, **caractérisé par le fait que** le coefficient de sécurité est comparé avec un troisième seuil limite et le coefficient de fiabilité est comparé avec un quatrième seuil limite, où, lorsque le coefficient de sécurité franchit le troisième seuil limite à la hausse et le coefficient de fiabilité franchit de quatrième seuil limite à la hausse, un deuxième signal de sortie est généré, indiquant le prolongement de l'intervalle entre des mesures de maintenance préventive préfixées d'un deuxième facteur, le troisième seuil limite étant supérieur au premier seuil limite et le quatrième seuil limite supérieur au deuxième seuil limite et le deuxième facteur supérieur au premier facteur.

6. Procédé suivant l'une des revendications 1 à 5, **caractérisé par le fait que** chaque grandeur déterminante a une dimension normalisée, la grandeur déterminante portant la valeur de 1 n'ayant pas d'incidence sur le coefficient de sécurité ou le coefficient de fiabilité, une grandeur déterminante supérieure à 1 augmentant le coefficient de sécurité respectivement le coefficient de fiabilité et une grandeur déterminante inférieure à 1 réduisant le coefficient de sécurité respectivement le coefficient de fiabilité, et

que le coefficient de sécurité et le coefficient de fiabilité sont calculés lors de l'étape c) par multiplication de l'ensemble des grandeurs déterminantes.

7. Procédé suivant la revendication 6, **caractérisé par le fait que** le premier et le deuxième seuils limites sont égaux à 1.

8. Procédé suivant l'une des revendications 1 à 7, **caractérisé par le fait qu'**au moins une première grandeur déterminante, au moins une deuxième grandeur déterminante ainsi que chaque grandeur déterminante supplémentaire comprennent une paire de grandeurs déterminantes, composée d'une grandeur déterminante de sécurité et d'une grandeur déterminante de fiabilité, le coefficient de sécurité étant calculé à partir des grandeurs déterminantes de sécurité et le coefficient de fiabilité à partir des grandeurs déterminantes de fiabilité.

9. Procédé suivant l'une des revendications 1 à 8, **caractérisé par le fait que** les données caractéristiques de l'installation à gaz (1) décrivent en outre la conception constructive de l'installation à gaz (1) et que, lors de l'étape b),

b3) à partir des données caractéristiques décrivant la conception constructive de l'installation à gaz (1), au moins une troisième grandeur déterminante est dérivée.

10. Procédé suivant la revendication 9, **caractérisé par le fait que** les données caractéristiques décrivant la conception constructive décrivent, entre autres, la présence et l'âge de composants enterrés de l'installation, où une grandeur déterminante est dérivée à partir de l'âge du composant enterré le plus âgé de l'installation, réduisant le coefficient de sécurité.

11. Procédé suivant la revendication 9, **caractérisé par le fait que** les données caractéristiques décrivant la conception constructive décrivent des particularités constructives de l'installation à gaz (1) ayant une incidence sur la sécurité et/ou la fiabilité.

12. Procédé suivant la revendication 11, **caractérisé par le fait que** les installations à gaz (1) sont des postes de détente et de régulation de gaz et que les données caractéristiques décrivant la conception constructive du poste de détente et de régulation de gaz comprennent :

- des données caractérisant la présence d'une installation de protection cathodique globale,
- des données caractérisant la possibilité d'un diagnostic à distance,
- des données caractérisant la présence de robinets dotés de presses étoupe,
- des données décrivant d'autres particularités constructives telles qu'un bipasse sans sécurisation de pression, une pénétration dans un local de chauffage ou la présence d'un espace intermédiaire.

**13.** Procédé suivant l'une des revendications 1 à 12, **caractérisé par le fait que**, lors de l'étape b),

b4) des données caractérisant le mode de fonctionnement de l'installation à gaz (1) sont saisies, à partir desquelles au moins une quatrième grandeur déterminent est dérivée.

**14.** Procédé suivant la revendication 13, **caractérisé par le fait que** les données caractérisant le mode de fonctionnement décrivent une exploitation de l'installation à gaz (1) à rythme accéléré au dessus de la moyenne et/ou non conforme à la conception de l'installation à gaz (1), et que la grandeur déterminante en dérivée entraîne une réduction du coefficient de sécurité et du coefficient de fiabilité.

**15.** Procédé suivant l'une des revendications 1 à 14, **caractérisé par le fait que**, lors de l'exploitation de l'installation à gaz (1), des informations relatives à l'exploitation d'installations à gaz identiques ou comparables sont collectées et saisies, et qu'au moins une cinquième grandeur déterminante en est dérivée.

**16.** Procédé suivant l'une des revendications 1 à 15, **caractérisé par le fait que**, lors de l'étape b2), au moins un événement d'exploitation de l'installation à gaz (1) est saisie à l'aide d'au moins un capteur installé dans l'installation à gaz (1).

Fig. 1

EP 1 598 717 B1

Sicherheit

Detailprüfung
notwendig

Integrität

1

0,5

Detailprüfung zwingend erforderlich

0,5                    1

Zuverlässigkeit

## Fig. 2A

Sicherheit        $= (y_1 \cdot y_2 \cdot \ldots \cdot y_n)$

Zuverlässigkeit   $= (x_1 \cdot x_2 \cdot \ldots \cdot x_n)$

Sicherheit

Zuverlässigkeit

## Fig. 2B

# Fig. 3

| Kategorie | Leitgröße | Sicherheit | Zuverlässigkeit | Werte |
|---|---|---|---|---|
| Lebenszyklus | effektives Anlagenalter | y1 | x1 | (Formel) |
| Auslegung und Fahrweise | nicht auslegungskonforme Fahrweise<br>> 10 % Überlast p.a.<br>Spitzenlast > 30 % über Auslegung | y2 | x2 | {1; 0,9} |
| | Kapazitätsänderungen: Druck und Leistung | y3 | x3 | {1; 0} |
| | Versorgungssicherheit<br>- gewährleistet bei Ausfall der Anlage<br>- mehrschieniger Aufbau | y4<br>y5 | x4<br>x5 | $y = 1$<br>$x \in \{1; 1,1\}$ |
| Ereignisse | Störungen, Ereignisse und betriebliche Meldungen | y6 | x6 | (Formel) |
| Konstruktion | Unterflur-Anlagenteile | y7 | x7 | x7=1;(Formel) |
| | GDRM-LKS vorhanden | y8 | x8 | x8=1; y8 ∈ {1; 1,1} |
| | Ferndiagnose | y9 | x9 | {1; 1,1} |
| | konstruktive Besonderheiten:<br>- Umgangsleitung ohne Druckabsicherung<br>- Wanddurchführung in Heizraum<br>  Zwischenraum vorhanden<br>  Einbausatz<br>  sonst | y10<br><br>y11<br>y12<br>y13 | x10<br><br>x11<br>x12<br>x13 | x = 1<br>y10 ∈ {1; 0,9}<br>y11 ∈ {1; 1,1}<br>y12 = 1<br>y13 ∈ {1; 0,9} |
| | Armaturen mit Stopfbuchse | y14 | x14 | x14=1;y14∈{1;0,9} |
| | Entlüftungsventil des Wasserkreislaufes in Heizraum | y15 | x15 | x15=1;y15∈{1;0,9} |
| Umfeld | Richtlinienänderung, Herstellerhinweise | y16 | x16 | {0,3; 0,7; 0,9; 1} |
| Kosten | Wartungs-/Störungsbehebungsaufwand 20% höher als Durchschnitt der Vorjahre | y17 | x17 | {1; 0,9} |

EP 1 598 717 B1

Fig. 4

EP 1 598 717 B1

**EP 1 598 717 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

*   US 5447059 A